Europäisches Patentamt

(19) European Patent Office

Office européen des brevets

(11) Veröffentlichungsnummer: **0 150 452**
**B1**

(12) **EUROPÄISCHE PATENTSCHRIFT**

(45) Veröffentlichungstag der Patentschrifft:
17.01.90

(51) Int. Cl.⁴: **G 01 S 7/62**, G 01 S 15/89

(21) Anmeldenummer: **84115893.4**

(22) Anmeldetag: **20.12.84**

(54) **Sender-Empfänger-Vorrichtung für ein Ultraschall-Bildgerät.**

(30) Priorität: 30.01.84 CH 416/84

(43) Veröffentlichungstag der Anmeldung:
07.08.85 Patentblatt 85/32

(45) Bekanntmachung des Hinweises auf die Patenterteilung:
17.01.90 Patentblatt 90/03

(54) Bennante Vertragsstaaten:
CH DE FR GB IT LI NL SE

(56) Entgegenhaltungen:
EP-A-0 024 540
DE-A-2 736 310
DE-A-3 004 689
DE-B-2 658 222
US-A-3 919 683
US-A-4 019 169
US-A-4 159 462
US-A-4 319 489

(73) Patentinhaber: KONTRON INSTRUMENTS HOLDING N.V.
130 Schottegatwegoost
Willemstad Curacao (AN)

(72) Erfinder: Burckhardt, Christoph B., Dr.
Rebgasse 14
CH-4132 Muttenz (CH)
Erfinder: Fehr, Rainer
Im Wygärtli 36
CH-4114 Hofstetten (CH)
Erfinder: Krummenacher, Peter
Bleumatthalde 12
CH-5264 Gipf-Oberfrick (CH)

(74) Vertreter: Körber, Wolfhart, Dr.
Patentanwälte Dipl.-Ing. H. Mitscherlich Dipl.-Ing. K.
Gunschmann Dr.rer.nat. W. Körber Dipl.Ing. J. Schmidt-
Evers Dipl.-Ing. W. Melzer Steinsdorfstrasse 10
D-8000 München 22 (DE)

EP 0 150 452 B1

LIBERGRAF, STOCKHOLM 1990

## Beschreibung

Die Erfindung betrifft eine Sender-Empfänger-Vorrichtung für ein einen Steuersignalgenerator enthaltendes Ultraschall-Bildgerät, mit

- einer Ultraschall-Wandleranordnung aus nebeneinander angeordneten Wandlerelementen,
- Schaltungseinrichtungen mit einer ersten Gruppe von M Anschlüssen und mit einer zweiten Gruppe von N jeweils mit einem der Wandlerelemente verbundenen Anschlüssen sowie steuerbaren Schaltmitteln zur Verbindung der Anschlüsse der ersten und zweiten Gruppe nach einem durch erste Steuersignale des Steuersignalgenerators vorgebbaren Zuordnungsschema,
- einem einen Impulsgenerator enthaltenden Sendesignalgenerator zur Erzeugung von M nach Massgabe von zweiten Steuersignalen des Steuersignalgenerators unterschiedlich verzögerten Wandler-Erregersignalen, von denen jedes einem anderen Anschluss der ersten Gruppe von Anschlüssen zugeführt ist, und
- einer Echosignal-Verarbeitungsschaltung, welche M jeweils mit einem anderen Anschluss der ersten Gruppe von Anschlüssen verbundene Eingänge, ferner erste steuerbare Verzögerungsmittel zur unterschiedlichen Verzögerung der an den Eingängen empfangenen Echosignale nach Massgabe dritter Steuersignale des Steuersignalgenerators sowie Summierschaltungen zur Erzeugung eines Summensignals aus den unterschiedlich verzögerten Echosignalen aufweist.

Bei medizinischen Untersuchungen ist oft die Durchführung verschiedener Abtastverfahren (z. B. einen sogenannten Linear-Scan und einen Sector-Scan) zweckmässig oder sogar erforderlich, um eine Diagnose zu ermöglichen. Da der Preis von Ultraschall-Bildgeräten relativ hoch ist, ist es wünschenswert, über eine Sende-Empfänger-Vorrichtung zu verfügen, welche die Durchführung verschiedener Abtastverfahren mit dem sonst gleichen Ultraschall-Bildgerät ermöglicht.

Ein Ultraschall-Bildgerät, das unterschiedliche Abtastverfahren ermöglicht und das eine Sender-Empfänger-Vorrichtung der eingangs genannten Art enthält, ist aus der US-A-4 159 462 bekannt. Dieses Gerät hat den Nachteil, dass sein Aufbau einen sehr hohen Schaltungsaufwand erfordert. Dies ist hauptsächlich darauf zurückzuführen, dass bei diesem bekannten Gerät für jedes Wandlerelement Mittel zur Verzögerung des Sende- bzw. des Empfangssignals vorgesehen sind, welche die ganze notwendige Verzögerung bewirken müssen. Die erforderlichen Verzögerungen sind verhältnismässig gross, typischerweise einige Mikrosekunden, und sie sind ausserdem für jedes Wandlerelement und für jede Strahlrichtung verschieden. Gemäss der US-A-4 159 462 sind jedem Wandlerelement Mittel zur Verzögerung des Sendesignals und Mittel zur Verzögerung der Echosignale zugeordnet. Dies ist sehr aufwendig, da man dafür eine Verzögerungseinheit zur Erzeugung der maximal notwendigen Verzögerung sovielmal aufbauen muss, wie man aktive Elemente auf dem Wandler hat. Dasselbe gilt im Prinzip für das Gerät gemäss der EP-A-024 540 mit dem Unterschied, dass in diesem Gerät pro aktives Wandlerelement dieselbe Verzögerungsmittel für die Sende- und die Echosignale verwendet werden.

Zur Erzeugung von Bildern hoher Qualität muss die Sender-Empfänger-Vorrichtung ausserdem Mittel zur Fokussierung der gesendeten Ultraschallwellen und vorzugsweise auch Mittel zur dynamischen Fokussierung der Empfangscharakteristik enthalten. Wenn man versuchen würde, eine solche Vorrichtung durch blosse Aggregation der Mittel zu bauen, die im Stand der Technik zur Durchführung der verschiedenen Abtastverfahren und der dabei verwendeten elektronischen Aufbereitung bzw. Verarbeitung der Sende- bzw. der Echosignale bekannt sind, wäre der resultierende Schaltungsaufwand sehr gross. Dies hätte zwei gewichtige Nachteile. Einerseits wären dadurch die Herstellungskosten der Sender-Empfänger-Vorrichtung drastisch erhöht. Andererseits würde die grosse Zahl der hintereinander geschalteten elektronischen Komponenten eine erhebliche Verschlechterung des Signal/Rausch-Verhältnisses, und eine entsprechende erhebliche Verschlechterung der Bildqualität verursachen.

Der Erfindung liegt daher die Aufgabe zugrunde, eine Sender-Empfänger-Vorrichtung der eingangs genannten Art bereitzustellen, welche mit geringerem Schaltungsaufwand die Durchführung verschiedener Abtastverfahren, insbesondere Compound-Scan und Sektor-Scan praktisch mit demselben Ultraschall-Bildgerät, und dabei die Erzeugung von Ultraschallbildern hoher Qualität ermöglicht.

Erfindungsgemäss wird diese Aufgabe mit einer Sender-Empfänger-Vorrichtung gelöst, die dadurch gekennzeichnet ist, dass

- der Sendesignalgenerator eine dem Impulsgenerator nachgeschaltete erste Verzögerungsschaltung zur grobstufigen Einstellung der Verzögerungsunterschiede zwischen den Wandler-Erregersignalen aufweist,
- die Schaltungseinrichtungen in den Verbindungen zwischen den Anschlüssen der ersten und zweiten Gruppe angeordnete zweite Verzögerungsmittel zur feinstufigen Einstellung der Verzögerungen der Wandler-Erregersignale bzw. der Echosignale nach Massgabe von vierten Steuersignalen des Steuersignalgenerators aufweisen, und
- die ersten Verzögerungsmittel eine zweite Verzögerungsschaltung zur vergleichsweise grobstufigen Einstellung der unterschiedlichen Verzögerungen der Echosignale enthalten.

3

Mit der erfindungsgemässen Sender-Empfänger-Vorrichtung ist es möglich geworden, mit geringerem Schaltungsaufwand und mit einem und praktisch demselben Ultraschall-Bildgerät (je nach gewähltem Abtastverfahren ist es lediglich erforderlich, das Gerät mit einer dafür geeigneten Wandleranordnung zu versehen) verschiedene Abtastverfahren, insbesondere einen Compound oder einen Sektorscan, aber auch einen Linear-Scan durchzuführen, und dabei Ultraschall-Bilder hoher Qualität zu erhalten.

Weitere Vorteile und Eigenschaften der vorliegenden Erfindung gehen aus der nachstehenden Beschreibung eines Ausführungsbeispiels hervor, das anhand der beiliegenden Zeichnungen erläutert wird.

Fig. 1 zeigt ein Blockschaltbild zur Erläuterung des prinzipiellen Aufbaus der erfindungsgemässen Vorrichtung,

Fig. 2 zeigt ein Blockschaltbild des Sendesignalgenerators 14 in Fig. 1,

Fig. 3 zeigt einige Pulse an den Ausgängen der Verzögerungsleitung 32 in Fig. 2,

Fig. 4 zeigt schematisch eine bevorzugte Ausführungsform der Blöcke 32 und 33 in Fig. 2,

Fig. 5 zeigt ein Blockschaltbild der Verzögerungsmittel 26—1 in Fig. 1,

Fig. 6 zeigt einige Signalverläufe zur Erläuterung des Verfahrens zur Erzeugung der Sendesignale,

Fig. 7 zeigt schematisch eine bevorzugte Ausführungsform des Blocks 19, durch den in Fig. 1 Mittel zur dynamischen Fokussierung der Empfangscharakteristik dargestellt sind,

Fig. 8 zeigt schematisch eine bevorzugte Ausführungsform des Blocks 21 in Fig. 1.

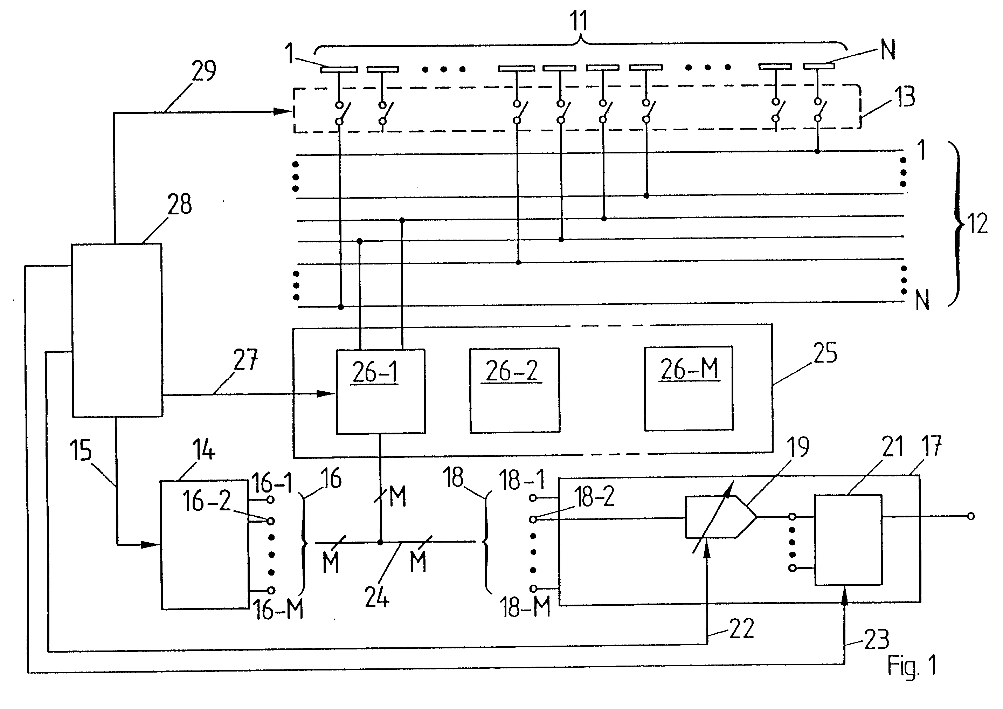

Figur 1 zeigt ein Blockschaltbild einer erfindungsgemässen Sender/Empfänger-Vorrichtung sowie deren Verbindungen zu einer Gruppe von Wandlerelementen 11 eines Ultraschall-Bildgeräts und zu einer Steuerschaltung 28.

Zur Erzeugung von Querschnittbildern eines Körpers arbeitet das Gerät nach dem Impulsechoverfahren. Dabei wird eine Anordnung von nebeneinander liegenden Wandlerelementen verwendet, die an den Körper angelegt werden. Meistens wird eine geradlinige Anordnung von Wandlerelementen verwendet. Eine gekrümmte Wandleranordnung kann jedoch auch verwendet werden, wenn diesem Umstand bei der Bemessung der Sender-Empfänger-Vorrichtung Rechnung getragen wird.

Zur Durchführung eines Sector-Scans werden gleichzeitig alle Elemente der Wandleranordnung mit der Sender-Empfänger-Vorrichtung verbunden. Zur Durchführung eines Linear-Scans oder eines Compound-Scans werden hingegen nacheinander Gruppen von nebeneinander liegenden Wandlerelementen mit der Sender-Empfänger-Vorrichtung verbunden.

Für den Fall eines Sector-Scans stellt die

4

Wandleranordnung 11 in Figur 1 die Gesamtheit aller Elemente 1—N der dafür verwendeten Wandleranordnung dar. In diesem Fall ist jedes Wandlerelement in der Regel mit einer der Leitungen einer Anordnung von N Busleitungen 12 fest verbunden.

Für den Fall eines Linear-Scans oder eines Compound-Scans stellt die Wandleranordnung 11 in Figur 1 eine der nacheinander verwendeten Gruppen von N-Wandlerelementen dar. In diesem Fall wird jedes Element der Gruppe von Wandlerelementen 11 über je einen Schalter einer Schalteranordnung 13 mit einer der Leitungen der Anordnung von Busleitungen 12 verbunden. Die Schalteranordnung 13 wird durch erste Steuersignale gesteuert, die ihr von der Steuerschaltung 28 über eine Leitung 29 zugeführt werden.

Wie in Figur 1 gezeigt, enthält die erfindungsgemässe Sender-Empfänger-Vorrichtung einen Sendesignalgenerator 14, eine Echosignal-Verarbeitungsschaltung 17, eine Anordnung von M Busleitungen 24 und Signalübertragungsmittel 25.

Im Ansprechen auf zweite Steuersignale, die ihm von der Steuerschaltung 28 über eine Leitung 15 zugeführt werden, gibt der Sendesignalgenerator 14 Gruppen von ausgewählten Sendesignalen, die vorbestimmte zeitliche Lagen haben, über eine Mehrzahl von Ausgängen 16 ab. Dabei wird jeweils ein Sendesignal einer Gruppe über je einen Ausgang abgegeben.

Die Echosignal-Verarbeitungsschaltung 17 hat eine Mehrzahl von Eingängen 18 und enthält erste veränderbare Verzögerungsmittel 19, 21, mit denen im Ansprechen auf dritte Steuersignale, die von der Steuerschaltung 28 über Leitungen 22, 23 geliefert werden, selektive Verzögerungen der Echosignale, die zu den Eingängen 18 gelangen, durchführbar sind. In Figur 1 sind die Verzögerungsmittel 19 nur für einen der Eingänge der Echosignal-Verarbeitungsschaltung dargestellt. Derartige Verzögerungsmittel sind jedoch auch für die meisten der anderen Eingänge vorgesehen. Der Block 21 in Figur 1 stellt hingegen Verzögerungsmittel dar, mit denen selektive, grob quantisierte Verzögerungen aller Echosignale durchführbar sind, die an die Eingänge der Echosignal-Verarbeitungsschaltung 17 gelangen.

Die Anordnung von Busleitungen 24 verbindet je einen Ausgang des Sendesignalgenerators 14 mit einem Eingang der Echosignal-Verarbeitungsschaltung 17.

Die Signalübertragungsmittel 25 sind zwischen der Anordnung von Busleitungen 24 und der Anordnung von Busleitungen 12 eingeschaltet und dienen zur Übertragung der Sende- und der Echosignale. Die Mittel 25 enthalten zweite veränderbare Verzögerungsmittel 26—1, 26—2, ... 26—M, mit denen, im Ansprechen auf vierte Steuersignale, die von der Steuerschaltung über eine Leitung 27 geliefert werden, selektive, fein quantisierte Verzögerungen der Sende- und der Echosignale durchführbar sind. In Figur 1 sind nur die elektrischen Anschlüsse des Blocks 26–1 dargestellt. Die übrigen Blöcke 26–2 bis 26–M haben ähnliche, in Figur 1 nicht gezeigte Anschlüsse. Wie in Figur 1 schematisch dargestellt ist jeder der Blöcke 26–1, 26–2, etc. einerseits mit wenigstens zwei Leitungen der Anordnung von Busleitungen 12, andererseits mit allen Leitungen der Anordnung von Busleitungen 24 verbunden.

Bei der Durchführung eines Sector-Scans mit einer geradlinigen Wandleranordnung werden bekanntlich nacheinander Ultraschall-Pulse in eine Vielzahl von verschiedenen Richtungen gesendet, und die jeweils erhaltenen Echosignale nach einer geeigneten Verarbeitung mit einer Anzeigeeinheit sichtbar gemacht. Bei der Durchführung eines Compound-Scans mit einer geradlinigen Wandleranordnung wird ein ähnliches Verfahren durchgeführt, das jedoch nicht mit einer einzigen Gruppe von Wandlerelementen, sondern mit verschiedenen Wandlergruppen durchgeführt wird, die nacheinander zum Senden bzw. zum Empfang benutzt werden. Ein solches Verfahren ist in der deutschen Offenlegungsschrift 2 645 738 beschrieben.

Beim Senden von Ultraschallwellen mit einer Gruppe von nebeneinander liegenden Wandlerelementen wird die Richtung des jeweils gesendeten Ultraschall-Strahlenbündels durch die relative zeitliche Lage der Sendesignale bestimmt, die den Wandlerelementen zugeführt werden. Zum Senden von Ultraschallwellen in eine bestimmte Richtung werden daher den Wandlerelementen Sendesignale zugeführt, die im Bezug auf ein Bezugssignal unterschiedliche Verzögerungen aufweisen, wobei die Verzögerung, die jedem Sendesignal zugeordnet wird, in Funktion der gewünschten Senderichtung und der relativen Lage des Wandlerelements innerhalb der Wandleranordnung ermittelt wird. Zur zweckmässigen Erfassung der von den Echowellen getragenen Bildinformation ist eine ähnliche Verarbeitung der Echosignale erforderlich. Hierfür werden diese Signale unterschiedlich verzögert, wobei die spezifische Verzögerung, die jedem Echosignal zugeordnet wird, in Funktion der Empfangsrichtung und der relativen Lage des Wandlerelements innerhalb der Wandleranordnung ermittelt wird. Die unterschiedlich verzögerten Echosignale werden dann addiert und zur Anzeigeeinheit weitergeleitet.

Wie nachstehend im Detail beschrieben, enthält die erfindungsgemässe Sender-Empfänger-Vorrichtung gemäss Figur 1 Mittel zur Durchführung der oben erwähnten Verzögerungen der Sende- bzw. Echosignale.

In einer bevorzugten Ausführungsform, die eine Verbesserung der Qualität der erzeugten Ultraschallbilder ermöglicht, enthält die Sender-Empfänger-Vorrichtung gemäss Figur 1 folgende zusätzliche Verzögerungsmittel:

– Mittel, die zusätzliche Verzögerungen der Sendesignale und dadurch eine Fokussierung der gesendeten Ultraschall-Strahlenbündel ermöglichen,

– Mittel, die zusätzliche und mit der Zeit variable Verzögerungen der Echosignale und dadurch eine dynamische Fokussierung der Empfangscharakteristik ermöglichen.

Die gesamte Verzögerung eines typischen Sendesignals, das einem der Wandlerelemente in Figur 1 zugeführt wird, setzt sich aus einer grob quantisierten Teilverzögerung, die im Sendesignalgenerator 14 durchgeführt wird, und einer fein quantisierten Teilverzögerung zusammen, die in den Signalübertragungsmitteln 25 durchgeführt wird.

Die gesamte Verzögerung eines typischen, von einem Wandlerelement abgegebenen und in der Sender-Empfänger-Vorrichtung gemäss Figur 1 verarbeiteten Echosignals setzt sich ebenfalls aus einer fein quantisierten Teilverzögerung, die zum Teil in den Signalübertragungsmitteln 25 und zum Teil in den Verzögerungsmitteln 19 durchgeführt wird, und einer grob quantisierten Teilverzögerung zusammen, die in den Verzögerungsmitteln 21 durchgeführt wird.

Die obige Beschreibung des prinzipiellen Aufbaus und der Funktionsweise einer erfindungsgemässen Sender-Empfänger-Vorrichtung lässt erkennen, dass folgende Merkmale derselben eine erhebliche Reduktion des Schaltungsaufwands ermöglichen:

– Signalübertragungsmittel 25, durch die sowohl die Sendesignale als auch die Echosignale übertragen werden, und in denen ein Teil der gesamten Verzögerung jedes Sende-bzw. Echosignals durchgeführt wird,
– an jedes der Verzögerungsmittel 26–1, 26–2, etc. werden wenigstens zwei Wandlerelemente angeschlossen.

Eine bevorzugte Ausführungsform des Schaltungsaufbaus gemäss Figur 1 wird nun anhand der beiliegenden Figuren beschrieben.

Die Wandlergruppe 11 besteht aus 32 Wandlerelementen und jedes dieser Elemente ist über einen Schalter der Schalteranordnung 13 an eine Leitung der Anordnung von Busleitungen 12 anschliessbar. Diese besteht also aus 32 Leitungen.

Die Anordnung von Busleitungen 24 besteht aus 16 Leitungen. Jede dieser Leitungen verbindet einen Ausgang des Sendesignalgenerators 14 mit einem Eingang der Echosignal-Verarbeitungsschaltung 17.

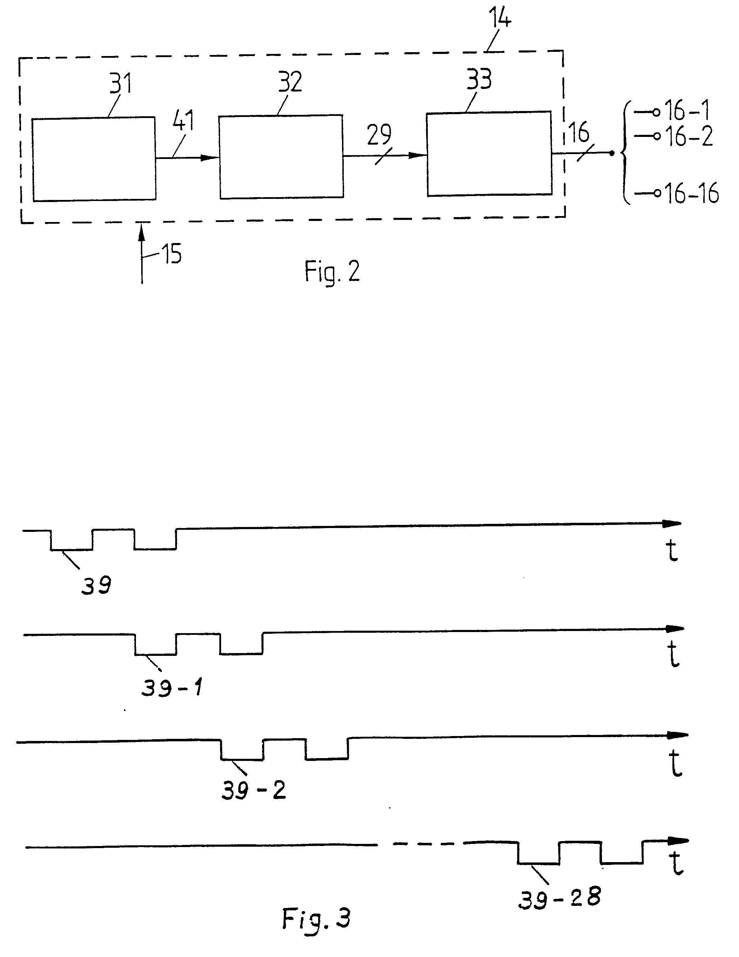

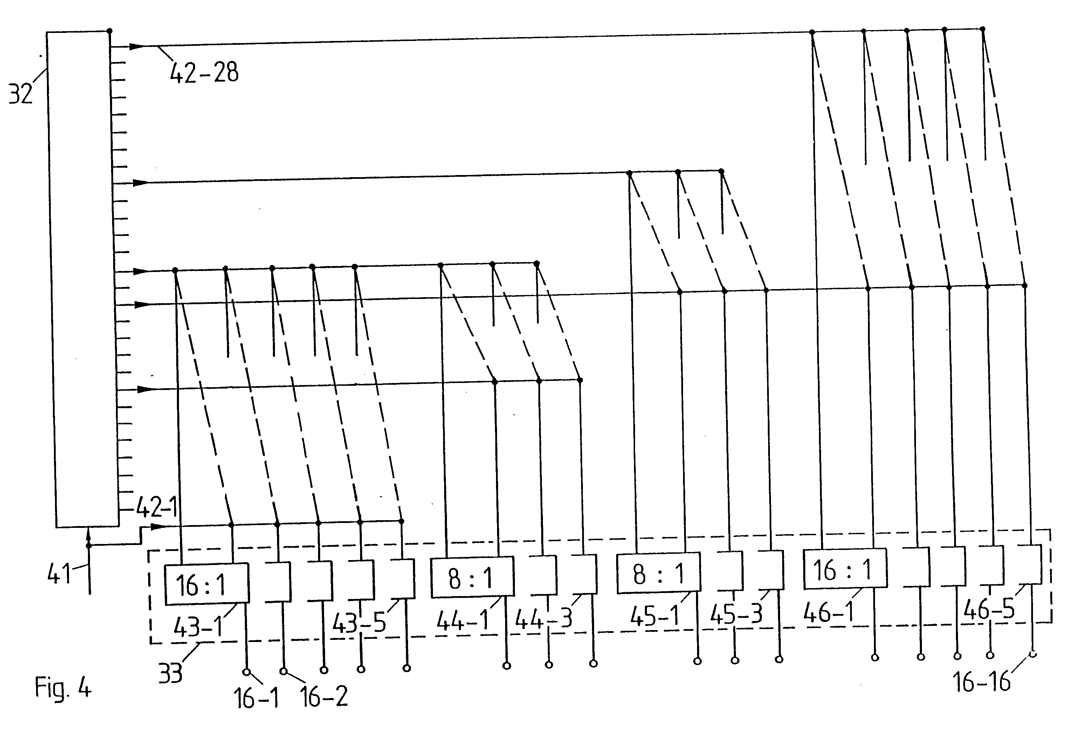

Figur 2 zeigt ein Blockdiagramm des Sendesignalgenerators 14 in Figur 1. Dieser enthält einen Pulsgenerator 31, eine digitale Verzögerungsschaltung 32, z. B. ein Schieberegister, und eine Multiplexer-Anordnung 33. Im Ansprechen auf einen Taktimpuls gibt der Pulsgenerator 31 an seinem Ausgang einen ersten Puls 39 ab. Ein solcher Puls ist in der Figur 3 dargestellt. Wenn ein Puls 39 über eine Leitung 41 an den Eingang der Verzögerungsschaltung 32 (siehe Fig. 4) gelangt, werden an ihren 28 Ausgängen 42–1 bis 42–28 Pulse 39–1, 39–2, ...., 39–28 abgegeben, die in Bezug auf den ersten Puls 39 verschiedene, grob quantisierte Verzögerungen haben. Diese Pulse sind auch in Figur 3 dargestellt. Das Zeitintervall zwischen zeitlich aufeinanderfolgenden Pulsen an den Ausgängen der Verzögerungsschaltung 32 beträgt 200 nsec. An einem weiteren Ausgang der Verzögerungsschaltung 32 wird der unverzögerte Puls 39 abgegeben. Im Ansprechen auf zweite Steuersignale, die ihr über Leitungen 15 zugeführt werden, verbindet die Multiplexer-Anordnung 33 wahlweise 16 Ausgänge der Verzögerungsschaltung 32 mit den Ausgängen 16–1, 16–2 ... 16–16 des Sendesignalgenerators, und dadurch mit den 16 Leitungen der Anordnung von Busleitungen 24. Figur 4 zeigt schematisch die Struktur der Multiplexer-Anordnung 33 und ihre Anschlüsse. Wie dort gezeigt, enthält die Multiplexer-Anordnung 33 eine Anordnung von digitalen Multiplexern 43–1 bis 43–5, 44–1 bis 44–3, 45–1 bis 45–3 und 46–1 bis 46–5. Die Multiplexer-Anordnung 33 ist mit dem Eingang der Verzögerungsschaltung 32 und mit ihren Ausgängen 42–1 bis 42–28 verbunden. Die Multiplexer-Anordnung 33 ist außerdem mit den Ausgängen 16–1 bis 16–16 des Sendesignalgenerators verbunden. Die Steuersignale, die die Funktion der Multiplexer-Anordnung 33 steuern, werden ihr über Leitungen 15 zugeführt, die in der Figur 2 schematisch durch eine einzige Leitung dargestellt sind. Die Multiplex-Verhältnisse der Multiplexer in Figur 4 sind darin für jede Untergruppe von Multiplexern in einem der Blöcke angegeben.

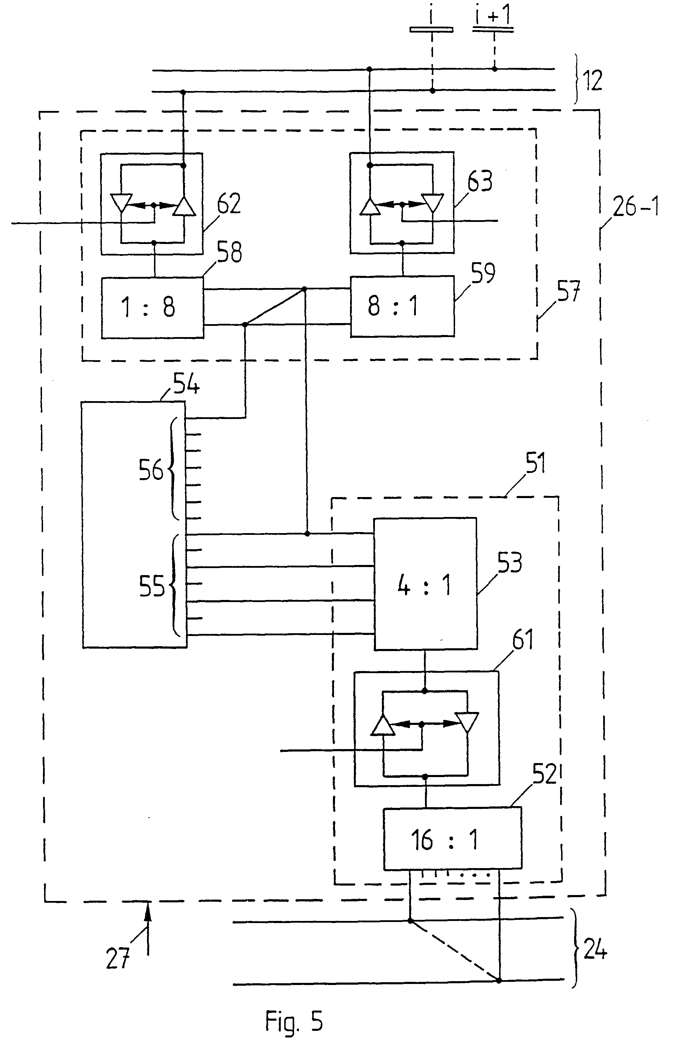

Figur 5 zeigt ein Blockdiagramm der Verzögerungsmittel 26–1 in Figur 1. Solche Mittel sind gemäss Figur 1 jeweils zwischen wenigstens zwei Wandlerelementen und sämtlichen Leitungen der Anordnung von Busleitungen 24 einschaltbar. Wie in Figur 5 dargestellt, enthalten die Verzögerungsmittel 26–1 eine Verzögerungsleitung 54, z. B. eine im Handel erhältliche LC-Verzögerungsleitung, die eine erste und eine zweite Gruppe von Anzapfungen 55 bzw. 56 hat, eine erste Multiplexer-Anordnung 51, durch die jede Leitung der Anordnung von Busleitungen 24 wahlweise an eine Anzapfung der ersten Gruppe von Anzapfungen 55 der Verzögerungsleitung 54 anschliessbar ist, und eine zweite Multiplexer-Anordnung 57, durch die jedes der wenigstens zwei Wandlerelemente wahlweise an eine Anzapfung der zweiten Gruppe von Anzapfungen 56 der Verzögerungsleitung 54 anschliessbar ist. Die Multiplexer-Anordnung 51 enthält einen Multiplexer 52, der über entsprechende Anschlüsse einerseits mit den 16 Leitungen der Anordnung von Busleitungen 24, andererseits über einen bidirektionalen Verstärker 61 mit einem Multiplexer 53 verbunden ist, der über entsprechende Anschlüsse an die Gruppe von Anzapfungen 55 der Verzögerungsleitung 54 angeschlossen ist. Die Multiplexer-Anordnung 57 enthält ebenfalls zwei Multiplexer 58, 59. Diese beiden Multiplexer sind über entsprechende Anschlüsse an die Gruppe von Anzapfungen 56 der Verzögerungsleitung 54 angeschlossen. Jeder der Multiplexer 58, 59 ist ausserdem über je einen bidirektionalen Verstärker 62 bzw. 63 mit je einer Leitung der Anordnung von Busleitungen 12 verbunden. Die Multiplexer 52, 53, 58, 59 sind im Handel erhältliche analoge Multiplexer. In Figur 5 ist das Multiplex-Verhältnis für jeden der dort gezeigten Multiplexer im jeweiligen Block angegeben. Durch die Wahl der Anzapfungen, an die die Multiplexer der Multiplexer-Anordnungen 51 bzw. 57 angeschlossen werden, können verschiedene, fein quantisierte Verzögerungen der durch die Verzögerungsleitung übertragenen Signale eingeführt werden. Dabei ermöglichen die Anzapfungen der ersten Gruppe von Anzapfungen 55 Verzögerungsinkremente von 50 nsec, während die Anzapfungen der zweiten Gruppe von Anzapfungen 56 Verzögerungsinkremente von 25 ns ermöglichen. Die Steuersignale für die Multiplexer-Anordnungen 51 und 57 werden über eine Anzahl von Leitungen übertragen, die in Figur 5 schematisch durch die Leitung 27 angedeutet sind. Diese Steuersignale werden von der Steuerschaltung 28 abgegeben und in Registern (in Fig. 5 nicht gezeigt) gespeichert, und zwar vor der Ausstrahlung jedes Ultraschallimpulses mit der Wandleranordnung 11. In diesen Registern werden Steuersignale sowohl für die Übertragung der Sendesignale, wie auch für die Übertragung der Echosignale gespeichert. In der Regel sind die Steuersignale für die Übertragung der Sendesignale verschieden von denjenigen, die für die Übertragung der Echosignale vorgesehen sind.

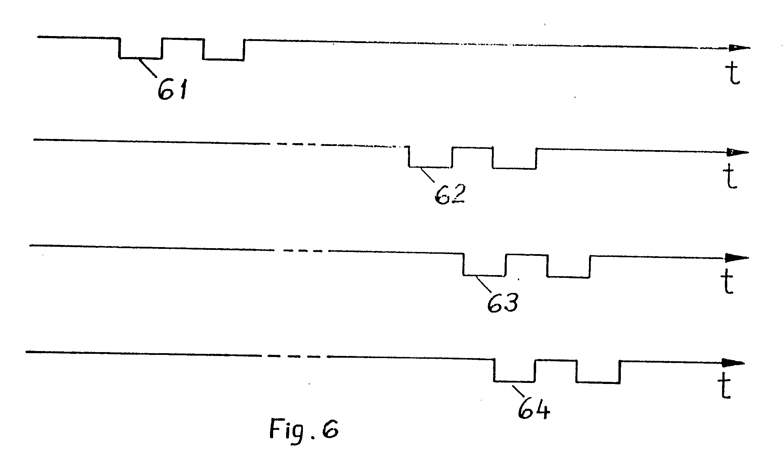

Die Figur 6 zeigt einige Signalverläufe, die zur Erläuterung der Übertragung eines Sendesignals durch die Verzögerungsmittel 26–1 dienen. Im oberen Teil der Figur 6 ist ein Puls 61 dargestellt, der zur Definition der zeitlichen Lage der übrigen Pulse als Bezugspuls dient. Der Puls 62 in Figur 6 stellt einen Puls dar, der vom Sendesignalgenerator 14 in Figur 1 über eine der Busleitungen 24 abgegeben wird. Durch die oben erwähnte Steuerung der Multiplexer-Anordnungen 51, 57 wird ein solcher Puls durch die Verzögerungsleitung 54 zu einem Wandlerelement i weitergeleitet. Dabei erfährt er eine gewisse Verzögerung von z. B. 125 ns. Ein solcher Puls ist in Figur 6 als Puls 63 dargestellt. In ähnlicher Weise wird vom Puls 62 ein Puls 64 abgeleitet, der einem Wandlerelement i+1 zugeführt wird. Wie aus Figur 6 ersichtlich, hat ein solcher Puls 64 in der Regel eine gewisse Verzögerung von z. B. 75 nsec in Bezug auf Puls 63. Alle Sendepulse haben eine negative Polarität. Aus diesem Grund werden die Sendepulse von der Echo-Signalverarbeitungsschaltung 17 nicht verarbeitet.

Der Multiplexer 52 in Figur 5 hat zwei wichtige Funktionen. Bei der Durchführung von Abtastverfahren, bei denen das gesendete Ultraschall-Strahlenbündel bzw. die Empfangscharakteristik in der Abtastebene drehbar sein muss z. B. bei der Durchführung eines Sector- oder eines Compound-Scans, ermöglicht der Multiplexer 52 die Sende- bzw. Empfangsrichtung nach links oder nach rechts zu drehen. Ohne den Multiplexer 52 wäre dies mit der erfindungsgemässen Schaltungsanordnung gemäss Figur 1 nicht möglich, weil darin die Mittel zur Durchführung der groben Teilverzögerung der Sende- bzw. der Echosignale so angeordnet sind, dass damit ein gesendetes Ultraschall-Strahlenbündel bzw. die entsprechende Empfangscharakteristik von der Senkrechten ausgehend nur in einer Richtung abgelenkt werden könnte, d.h. nur nach rechts oder nur nach links. Durch diese Anordnung der soeben erwähnten Verzögerungsmittel wird eine Verringerung des Schaltungsaufwands erzielt. Bei der Durchführung von Abtastverfahren, bei denen verschiedene Wandlergruppen nacheinander verwendet werden, z. B. bei der Durchführung eines Compound- oder eines Linear-Scans, dient der Multiplexer 52 ausserdem dazu, die Übertragungswege zyklisch zu vertauschen, damit die Sende- bzw. die Echosignale die geeigneten Verzögerungen erfahren. Dies ist erforderlich, weil bei den letztgenannten Verfahren eine zyklische Ansteuerung der Wandlerelemente durchgeführt wird.

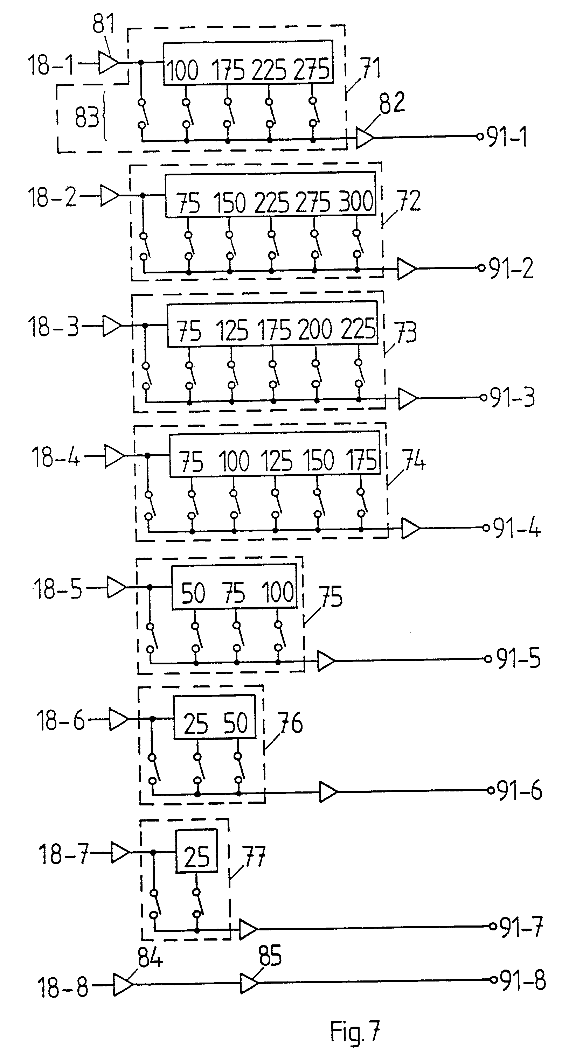

Der Übertragungsweg für die Echosignale verläuft zunächst von jedem Wandlerelement bis zu einer der Leitungen der Anordnung von Busleitungen 24. Dabei ist die Funktion der Verzögerungsmittel 26–1, 26–2, etc. analog wie oben für die Übertragung eines Sendesignals beschrieben. Für die Übertragung der Echosignale werden jedoch die Multiplexer 53, 59, 58 in Figur 5 in der Regel anders angesteuert als für die Übertragung von Sendesignalen. Die Echosignale gelangen auf diese Weise über Leitungen der Anordnung von Busleitungen 24 zu den Eingängen 18–1, 18–2, ...., 18–16 der Echosignal-Verarbeitungsschaltung 17 in Figur 1. Die Echosignale haben positive Polarität und können daher durch die Schaltung 17 verarbeitet werden. Wie oben erwähnt, enthält die Schaltung 17 Mittel zur dynamischen Fokussierung der Empfangscharakteristik. Diese Mittel sind in Figur 1 für einen der Eingänge durch eine variable Verzögerungsleitung 19 dargestellt. Die Mittel zur Durchführung der erwähnten dynamischen Fokussierung sind in Figur 7 für eine Hälfte der Eingänge der Echosignal-Verarbeitungsschaltung 17 schematisch dargestellt. Für die andere Hälfte der Eingänge der Schaltung 17 sind gleiche Mittel vorhanden. Wie aus Figur 7 ersichtlich, können die Echosignale, die den Eingängen der Echosignal-Verarbeitungsschaltung 17 zugeführt werden, durch variable Verzögerungsleitungen 71–77 verzögert werden. Diese enthalten im Handel erhältliche LC-Verzögerungsleitungen. Die durch diese Verzögerungsleitungen bewirkten Verzögerungen werden während des Empfangs durch eine geeignete Steuerung der Schalter 83 stufenweise verändert. Dadurch wird die dynamische Fokussierung der Empfangscharakteristik erzielt. In Figur 7 ist die erzielbare Verzögerung in ns für jede Anzapfung der Verzögerungsleitungen in den Blocks 71–77 angegeben. Jeder der in Figur 7 gezeigten Verzögerungsleitungen ist je ein Trennverstärker 81, 82 vor- bzw. nachgeschaltet. Für den Eingang 18–8 ist keine Verzögerungsleitung vorgesehen. Die an diesen Eingang gelangenden Echosignale werden durch Trennverstärker 84, 85 übertragen. Die Signale an den Ausgängen 91–1 bis 91–8 werden den Eingängen der Verzögerungsmittel 21 in Figur 1 zugeführt.

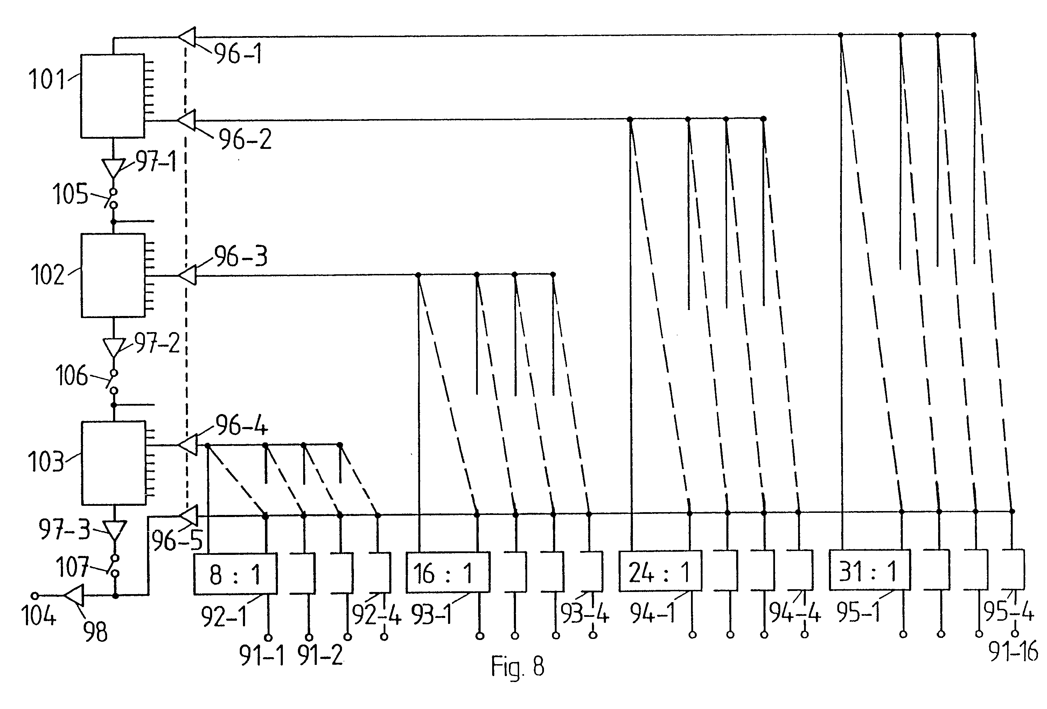

Der Übertragungsweg der Echosignale führt weiter von den 16 Ausgängen der Anordnung, deren Hälfte oben anhand der Figur 7 beschrieben ist, zu den 16 Eingängen der Verzögerungsmittel 21 in Figur 1. Der Aufbau dieser Mittel ist in Figur 8 schematisch dargestellt. Es ist daraus ersichtlich, dass die über Leitungen 91–1 bis 91–16 ankommenden Echosignale über eine Anordnung von analogen Multiplexern 92–1 bis 92–4, 93–1 bis 93–4, 94–1 bis 94–4, 95–1 bis 95–4 wahlweise entweder dem Eingang eines Ausgangverstärkers 98 oder Anzapfungen von Verzögerungsleitungen 101, 102, 103 zugeführt werden können, die durch eine geeignete Steuerung durch Schalter 105, 106 hintereinander geschaltet werden können. Mit diesen Verzögerungsleitungen wird eine grob quantisierte Teilverzögerung der Echosignale durchgeführt. Diese Quantisierung beträgt 200 ns. Die Multiplexer in Figur 8 werden durch Steuersignale gesteuert, die ihnen über eine Anzahl von Leitungen zugeführt werden, die in Figur 1 schematisch mit der Leitung 23 dargestellt sind. Die Multiplex-Verhältnisse der Multiplexer in Figur 8 sind darin für jede Untergruppe von Multiplexern in einem der Blöcke angegeben. Zur Vereinfachung der Darstellung sind in Figur 8 nicht alle zwischen den Multiplexern und den Anzapfungen der Verzögerungsleitungen 101 bis 103 vorhandenen Anschlüsse gezeigt, sondern nur einige davon. Am Ausgang 104 des Ausgangverstärkers 98 wird ein Ausgangssignal abgegeben, das die Summe aller von den Wandlerelementen 11 in Figur 1 angegebenen Echosignale nach der Verarbeitung in der Echosignal-Verarbeitungsschaltung 17 darstellt. In der Anordnung gemäss Figur 8 sind Trennverstärker 96–1 bis 96–5 und 97–1 bis 97–3 vorgesehen. Der Ausgang der Verzögerungsleitung 103 ist über einen gesteuerten Schalter 107 mit dem Eingang des Ausgangsverstärkers 98 verbunden. Das Signal am Ausgang 104 wird in bekannter Weise weiterverarbeitet, d.h. es wird zeitabhängig verstärkt, amplitudenkomprimiert und gleichgerichtet, bevor es zur Anzeigeeinheit des Ultraschall-Bildgeräts weitergeleitet wird.

Selbstverständlich kann die oben beschriebene Sender-Empfänger-Vorrichtung mit verschiedenen Wandleranordnungen und mit verschiedenen Sendefrequenzen verwendet werden. Diese liegen vorzugsweise zwischen 2,5 und 5 MHz. Zur Durchführung eines Sektor-Scans mit einer Sendefrequenz von 2,8 MHz ist z. B. eine Wandleranordnung mit insgesamt 32 Wandlerelementen geeignet, die je eine Breite von 0,4 mm haben. Zur Durchführung eines Compound-Scans mit einer Sendefrequenz von 3 MHz ist z. B. eine Wandleranordnung mit insgesamt 156 Wandlerelementen geeignet, die je eine Breite von 0,6 mm haben und in nacheinander ausgewählten Gruppen von 32 Elementen verwendet werden.

In Varianten der Sender-Empfänger-Vorrichtung gemäss Figur 1 können andere Verhältnisse zwischen der Zahl N der Elemente der Wandleranordnung 11 und der Zahl M der Leitungen der Anordnung von Busleitungen 24 vorgesehen werden. Im oben beschriebenen Beispiel ist das Verhältnis N : M = 2 : 1.

**Patentansprüche**

1. Sender-Empfänger-Vorrichtung für ein einen Steuersignalgenerator (28) enthaltendes Ultraschall-Bildgerät, mit

a) einer Ultraschall-Wandleranordnung aus nebeneinander angeordneten Wandlerelementen (11),

b) Schaltungseinrichtungen (12, 13, 25) mit einer ersten Gruppe von M Anschlüssen und mit einer zweiten Gruppe von N jeweils mit einem der Wandlerelemente verbundenen Anschlüssen sowie steuerbaren Schaltmitteln (13, 26–1 bis 26–M) zur Verbindung der Anschlüsse der ersten und zweiten Gruppe nach einem durch erste Steuersignale des Steuersignalgenerators vorgebbaren Zuordnungsschema,

c) einem einen Impulsgenerator (31) enthaltenden Sendesignalgenerator (14) zur Erzeugung von M nach Massgabe von zweiten Steuersignalen des Steuersignalgenerators unterschiedlich verzögerten Wandler-Erregersignalen, von denen jedes einem anderen Anschluss der ersten Gruppe von Anschlüssen zugeführt ist,

d) einer Echosignal-Verarbeitungsschaltung (17), welche M jeweils mit einem anderen Anschluss der ersten Gruppe von Anschlüssen verbundene Eingänge (18–1 bis 18–M), ferner erste steuerbare Verzögerungsmittel (19, 21) zur unterschiedlichen Verzögerung der an den Eingängen empfangenen Echosignale nach Massgabe dritter Steuersignale des Steuersignalgenerators sowie Summierschaltungen zur Erzeugung eines Summensignals aus den unterschiedlich verzögerten Echosignalen aufweist,

dadurch gekennzeichnet, dass

e) der Sendesignalgenerator (14) eine dem Impulsgenerator nachgeschaltete erste Verzögerungsschaltung (32) zur grobstufigen Einstellung der Verzögerungsunterschiede zwischen den Wandler-Erregersignalen aufweist,

f) die Schaltungseinrichtungen (12, 13, 25) in den Verbindungen (25) zwischen den Anschlüssen der ersten und zweiten Gruppe angeordnete zweite Verzögerungsmittel (54) zur feinstufigen Einstellung der Verzögerungen der Wandler-Erregersignale bzw. der Echosignale nach Massgabe von vierten Steuersignalen des Steuersignalgenerators aufweisen, und

g) die ersten Verzögerungsmittel (19, 21) eine zweite Verzögerungsschaltung (21) zur vergleichsweise grobstufigen Einstellung der unterschiedlichen Verzögerungen der Echosignale enthalten.

2. Vorrichtung gemäss Anspruch 1, dadurch gekennzeichnet, dass die Schaltmittel in den Verbindungen (25) zwischen den Anschlüssen der ersten und der zweiten Gruppe angeordnete Multiplexer-Anordnungen (51, 57) enthalten, und dass die Zahl M der Anschlüsse der ersten Gruppe kleiner als die Zahl N der Anschlüsse der zweiten Gruppe ist.

3. Vorrichtung gemäss Anspruch 1, dadurch gekennzeichnet, dass die Schaltmittel in den Verbindungen (25) zwischen den Anschlüssen der ersten und der zweiten Gruppe für wenigstens je zwei benachbarte Wandlerelemente folgende Mittel enthalten:

– eine Verzögerungsleitung (54), die eine erste und eine zweite Gruppe von Anzapfungen (55, 56) hat,
– eine erste Multiplexer-Anordnung (51), durch die jeder Anschluß der ersten Gruppen von M Anschlüssen wahlweise an eine Anzapfung der ersten Gruppe von Anzapfungen (55) der Verzögerungsleitung (54) anschliessbar ist, und
– eine zweite Multiplexer-Anordnung (57), durch die jedes der wenigstens zwei Wandlerelemente wahlweise an eine Anzapfung der zweiten Gruppe von Anzapfungen (56) der Verzögerungsleitung (54) anschliessbar ist.

4. Vorrichtung gemäss Anspruch 1, dadurch gekennzeichnet, dass der Sendesignalgenerator (14)

– eine Multiplexer-Anordnung (33) enthält, durch die Ausgänge der Verzögerungsschaltung (32) wahlweise an Anschlüsse der ersten Gruppe von M Anschlüssen anschliessbar sind.

5. Vorrichtung gemäss Anspruch 1, dadurch gekennzeichnet, dass die erste steuerbaren Verzögerungsmittel (17) eine Anordnung von variablen Verzögerungsleitungen (19, 71 – 77), die je einen Ausgang haben, und deren Eingänge je mit einem Eingang der Echosignal-Verarbeitungsschaltung (17) verbunden sind,

– eine Anordnung von hintereinander schaltbaren festen Verzögerungsleitungen (101, 102, 103), die als Eingänge je eine Vielzahl von Anzapfungen haben, und
– eine Multiplexer-Anordnung (92–1, ... 95–4) enthalten, durch die die Ausgänge der variablen Verzögerungsleitungen wahlweise an Anzapfungen der festen Verzögerungsleitungen anschliessbar sind.

## Claims

1. A transmitter-receiver device for an ultrasonic imaging unit containing a control signal generator (28), comprising

a) an ultrasonic transducer array consisting of transducer elements (11) which are disposed side by side,

b) circuit arrangements (12, 13, 25) comprising a first first group of M connections and comprising a second group of N connections each connected to one of the transducer elements as well as controllable switching means (13, 26–1 to 26–M) for connecting the connections of the first and the second group in accordance with an allocation plan which can be preset by first control signals of the control signal generator,

c) a transmission signal generator (14) containing a pulse generator (31) for the production of M transducer energization signals delayed differentially in accordance with second control signals of the control signal generator, each transducer energization signal being fed to a different connection of the first group of connections,

d) an echo signal processing circuit (17) comprising M inputs (18–1 to 18–M) each connected to a different connection of the first group of connections, and further comprising first controllable delay means (19, 21) for differential delay of the echo signals received at the inputs in accordance with third control signals of the control signal generator as well as summating circuits for generating a sum signal from the differentially delayed echo signals,

characterized in that

e) the transmission signal generator (14) comprises a first delay circuit (32) connected downstream of the pulse generator for coarse adjustment of the delay differences between the transducer energization signals,

f) the circuit arrangements (12, 14, 25) comprise second delay means (54) disposed in the junctions (25) between the connections of the first and second groups for the fine adjustment of the delays of the transducer energization signals and of the echo signals in accordance with fourth control signals of the control signal generator and

g) the first delay means (19, 21) contain a second delay circuit (21) for the comparatively coarse adjustment of the different delays of the echo signals.

2. A device according to claim 1, characterized in that the switching means contain multiplexer arrays (51, 57) disposed in the junctions (25) between the connections of the first and the second group and in that the number M of connections of the first group is less than the number N of connections of the second group.

3. A device according to claim 1, characterized in that the switching means contain the following means in the junctions (25) between the connections of the first and the second group for at least one pair of adjacent transducer elements:

– a delay line (54) which has a first and a second group of tappings (55, 56),
– a first multiplexer array (51) by means of which each connection of the first group of M connections is· optionally connectable to a tapping of the first group of tappings (55) of the delay line (54) and
– a second multiplexer array (57) by means of which each of the at least two transducer elements is optionally connectable to a tapping of the second group of tappings (56) of the delay line (54).

4. A device according to claim 1, characterized in that the transmission signal generator (14)

– contains a multiplexer array (33) by means of which outputs of the delay circuit (32) are optionally connectable to connections of the first group of M connections.

5. A device according to claim 1, characterized in that the first controllable delay means (17) contain an array of variable delay lines (19, 71 – 77) each having an output and the inputs of which are each connected to one input of the echo signal processing circuit (17),

– an array of fixed delay lines (101, 102, 103) which are connectable in series and which each have a plurality of tappings as inputs and
– a multiplexer array (92–1, ... 95–4) by means of which the outputs of the variable delay lines are optionally connectable to tappings of the fixed delay lines.

## Revendications

1. Dispositif émetteur-récepteur destiné à un appareil d'imagerie par ultra-sons contenant un générateur (28) de signaux de commande, comportant:

a) un dispositif transducteur d'ultra-sons constitué d'éléments transducteurs (11) disposés au voisinage l'un de l'autre,

b) des dispositifs de circuit (12, 13, 25) comprenant un premier groupe de M connexions et un deuxième groupe de N connexions respectivement reliées chacune à l'un des éléments transducteurs ainsi que des moyens de commutation réglables (13, 26–1 à 26–M) pour relier les connexions des premier et deuxième groupes selon un schéma de correspondance qui peut être déterminé par des premiers signaux de commande du générateur de signaux de commande,

c) un générateur (14) de signaux d'émission contenant un générateur (31) d'impulsions pour créer M signaux d'excitation de transducteurs retardés différemment selon des deuxièmes signaux de commande du générateur de signaux de commande, dont chacun est amené à une autre connexion du premier groupe de connexions,

d) un circuit (17) de traitement de signaux d'écho qui présente M entrées (18–1 à 18–M) reliées respectivement à une autre connexion du premier groupe de connexions, ainsi que des premiers moyens de retard (19, 21) réglables en vue d'un retard différent des échos de signaux reçus aux entrées selon des troisièmes signaux de commande du générateur de signaux de commande, et en outre des circuits de sommation pour créer un signal de sommation à partir des signaux d'écho différemment retardés,

caractérisé en ce que

e) le générateur (14) de signaux d'émission présente un premier circuit de retard (32) monté en aval du générateur d'impulsions en vue d'un réglage grossier des différences de retards entre les signaux d'excitation des transducteurs,

f) les dispositifs de circuit (12, 13, 25) présentent, dans les liaisons (25) entre les connexions des premier et deuxième groupes, des deuxièmes moyens de retard (54) correspondants pour le réglage fin des retards des signaux excitateurs de transducteurs et des signaux d'écho selon des quatrièmes signaux de commande du générateur de signaux de commande, et

g) les premiers moyens de retard (19, 21) contiennent un deuxième circuit à retard (21) pour le réglage relativement grossier des différents retards des signaux d'écho.

2. Dispositif selon la revendication 1, caractérisé en ce que les moyens de commutation contiennent des dispositifs multiplexeurs (51, 57) disposés dans les liaisons (25) entre les connexions des premier et deuxième groupes, et en ce que le nombre M de connexions du premier groupe est plus petit que le nombre N de connexions du deuxième groupe.

3. Dispositif selon la revendication 1, caractérisé en ce que les moyens de commutation contiennent dans les liaisons (25) entre les connexions des premier et deuxième groupes, pour au moins chaque ensemble de 2 éléments transducteurs voisins, les moyens suivants:

- une ligne à retard (54) qui possède un premier et un deuxième groupes de prises de réglage (55, 56),

- un premier dispositif multiplexeur (51) par lequel chaque connexion du premier groupe de M connexions peut à volonté être connectée à une prise de réglage du premier groupe de prises de réglage (55) de la ligne à retard (54), et

- un deuxième dispositif multiplexeur (57), par lequel chacun des au moins deux éléments transducteurs peut au choix être connecté à une prise de réglage du deuxième groupe de prises de réglage (56) de la ligne à retard (54).

4. Dispositif selon la revendication 1, caractérisé en ce que le générateur (14) de signaux d'émission

- contient un dispositif multiplexeur (33) par lequel les sorties du circuit à retard (32) peuvent à volonté être connectées à des connexions du premier groupe de M connexions.

5. Dispositif selon la revendication 1, caractérisé en ce que les premiers moyens réglables de retard (17) contiennent un dispositif de lignes à retard variables (19, 71 à 77) qui possèdent chacune une sortie, et dont les entrées sont respectivement reliées à une entrée du circuit (17) de traitement de signaux d'écho,

- une disposition de lignes à retard (101, 102, 103) fixes qui peuvent être commutées l'une après l'autre, qui présentent respectivement comme entrées plusieurs prises de réglage, et

- un dispositif multiplexeur (92–1, ... 95–4) par lequel les sorties des lignes à retard variables peuvent au choix être connectées à des prises de réglage des lignes à retard fixes.

Fig. 1

EP 0 150 452 B1

Fig. 2

Fig. 3

Fig. 4

EP 0 150 452 B1

Fig. 5

Fig. 6

Fig. 7

Fig. 8

101

96-1

97-1

105

102

96-2

96-3

97-2

106

103

96-4

97-3

107

96-5

98

104

8 : 1

92-1

92-4

91-1  91-2

16 : 1

93-1

93-4

24 : 1

94-1

94-4

31 : 1

95-1

95-4

91-16

EP 0 150 452 B1

13